Europäisches Patentamt

European Patent Office

Office européen des brevets

(11) Numéro de publication : **0 514 281 A1**

# (12) DEMANDE DE BREVET EUROPEEN

(21) Numéro de dépôt : **92401342.8**

(22) Date de dépôt : **15.05.92**

(51) Int. Cl.⁵ : **G05B 19/18**

(30) Priorité : **17.05.91 FR 9106041**

(43) Date de publication de la demande :
**19.11.92 Bulletin 92/47**

(84) Etats contractants désignés :
**CH DE ES GB IT LI SE**

(71) Demandeur : **COMMISSARIAT A L'ENERGIE ATOMIQUE**
**31-33, rue de la Fédération**
**F-75015 Paris (FR)**

(72) Inventeur : **Detriche, Jean-Marie**
**6 La Gaillarderie**
**F-78590 Noisy Le Roi (FR)**

(74) Mandataire : **Mongrédien, André et al**
**c/o BREVATOME 25, rue de Ponthieu**
**F-75008 Paris (FR)**

(54) **Procédé d'initialisation de la position d'un bras de robot au debut d'un cycle de fonctionnement.**

(57) Procédé d'initialisation de la position d'un bras de robot (1) au début d'un cycle de fonctionnement dans lequel la position du bras a été enregistrée sous forme de coordonnées des états d'articulation (5) dans une mémoire permanente (13). L'ordinateur de commande compare la position enregistrée et actuelle du bras (1) à la position prédéterminée d'initialisation et détermine le mouvement qu'il convient d'appliquer.

FIG. 1

EP 0 514 281 A1

FIG. 1 A

L'invention se rapporte à un procédé d'initialisation de la position d'un bras de robot au début d'un cycle de fonctionnement.

Quand un bras de robot est mis en marche et que ses éléments moteurs et ses capteurs reçoivent de l'électricité, il convient de l'amener à une position déterminée d'initialisation pour lui permettre d'accomplir tous les mouvements ultérieurs qui lui seront commandés à partir de cette position qui est un état de référence. Le problème consiste en ce que les codeurs situés aux articulations reliant les tronçons enchaînés du bras sont des codeurs de position relative qui ne permettent qu'une mesure des mouvements aux articulations sans pouvoir donner la position proprement dite des tronçons, c'est-à-dire en général les angles que font les tronçons consécutifs. La position d'initialisation est généralement fournie par des capteurs supplémentaires tels que des capteurs "tout ou rien" composés d'un interrupteur situé sur un des tronçons aboutissant à chaque articulation et d'une came située sur l'autre tronçon : le changement d'état de l'interrupteur quand il touche la came fournit une position de référence de l'articulation. Ce moyen présente toutefois l'inconvénient de nécessiter un capteur supplémentaire à chaque articulation et de ne pas indiquer l'ampleur des mouvements à accomplir pour arriver à la position d'initialisation à partir de l'état de mise en marche, qui sont alors effectués simultanément ou successivement à l'aveuglette sans que le trajet du bras soit optimisé. Des déplacements de grande ampleur qui peuvent conduire à des collisions du bras avec des obstacles environnants risquent d'être produits.

L'objet de l'invention consiste à optimiser le procédé d'initialisation des bras de robot en fournissant la position de ce dernier au début du cycle de fonctionnement avant l'initialisation. Il est possible alors de choisir de faire passer le bras de robot par des points de passage sélectionnés en fonction de l'état de référence et de la position du bras à la mise en marche. Cependant, on verra que le procédé d'initialisation automatique peut éventuellement être interrompu si la situation l'exige; il comporte alors des passages où l'initialisation répond à une action directe de l'utilisateur, manuelle ou vocale.

Le procédé se caractérise sous la forme la plus générale en ce qu'il consiste à relever la position du bras à la fin du cycle de fonctionnement précédent et à enregistrer cette position dans une mémoire permanente sous forme de coordonnées, à lire ces coordonnées au début du cycle de fonctionnement suivant, à calculer des différences entre les coordonnées lues et des coordonnées exprimant la position d'initialisation, et à déplacer le bras jusqu'à la position d'initialisation en lui faisant parcourir des déplacements correspondant aux différences calculées.

On va maintenant passer aux commentaires des figures suivantes annexées à titre illustratif et non limitatif :

- la figure 1 est une vue d'ensemble d'un bras de robot et des moyens connexes,
- la figure 1A est une vue de détail d'une articulation d'un bras de robot,
- les figures 2 et 3 représentent deux états initiaux d'un bras de robot, et
- les figures 4 et 5 représentent deux organigrammes de fonctionnement.

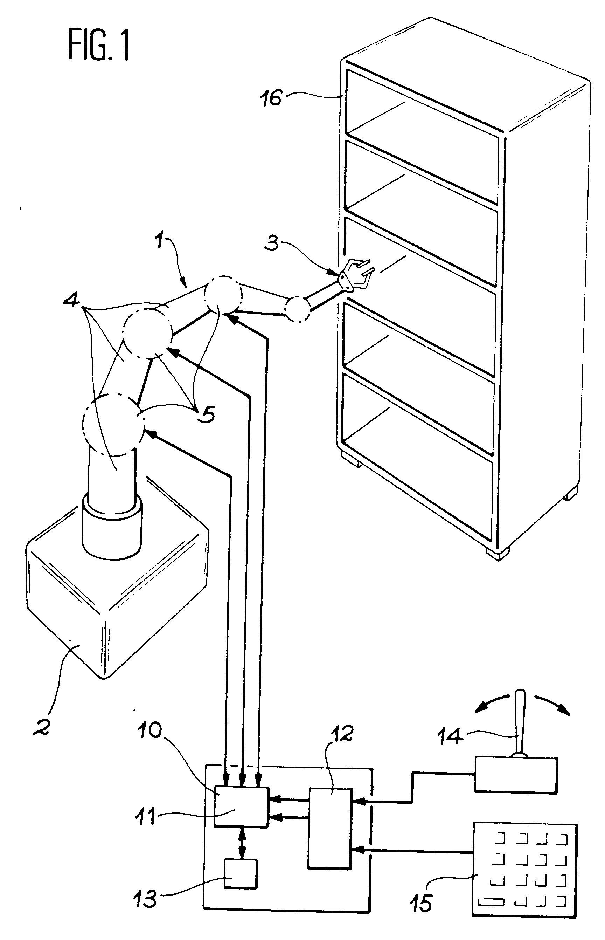

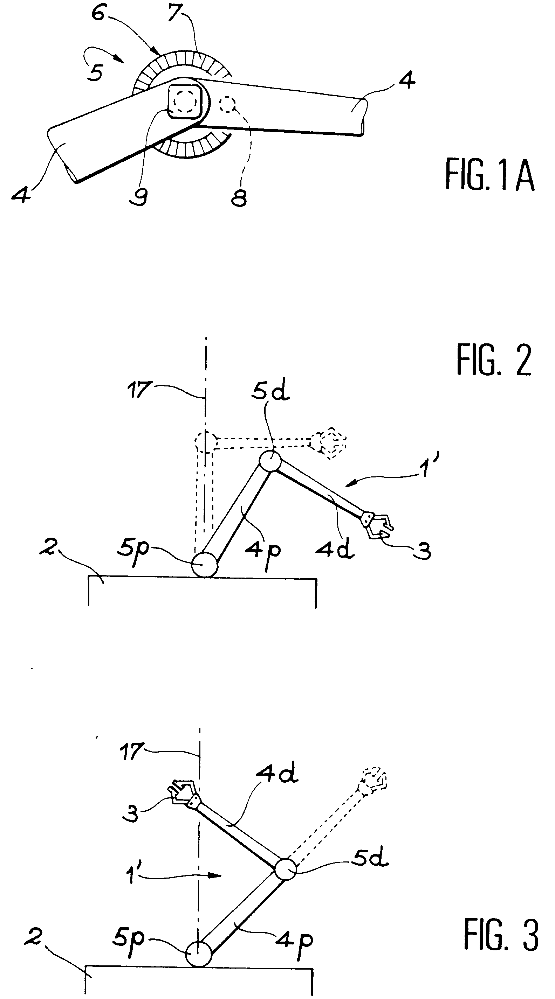

Le bras 1 de robot de la figure 1 comprend un socle 2 immobile auquel il est assujetti à une extrémité, un poignet 3 à son extrémité libre, et une série de tronçons enchaînés 4 reliant le socle 2 au poignet 3. Ils sont articulés entre eux par des articulations 5 dont l'une est représentée un peu plus en détail sur la figure 1A : elle comporte un codeur 6 relatif de position qui est constitué d'un disque gradué 7 concentrique à l'axe de l'articulation 5 et fixé à un des tronçons 4, et d'un lecteur 8 dirigé vers les graduations et situé sur l'autre tronçon 4 qui aboutit à l'articulation 5. Toutes les articulations 5 sont construites d'après le même modèle. Des fils électriques relient les lecteurs optiques 8 et des moteurs 9, non représentés en détail et qui permettent de mouvoir les articulations 5, à un ordinateur de commande 10 qui comporte en particulier un calculateur de coordonnées 11, un convertisseur 12 et une mémoire permanente 13. Les mouvements du bras 1 sont commandés par un levier 14 qui impose des mouvements du poignet 3 orientés dans la direction dans laquelle il est basculé et un clavier 15 de commande qui peut servir en particulier à commander des mouvements spéciaux ou des déplacements du poignet 3 par des instructions numériques.

Le bras 1 peut être destiné à la préhension d'objets de la vie courante et aider ainsi à l'autonomie de personnes infirmes qui peuvent cependant manier le levier 14 ou le clavier 15, ou éventuellement des systèmes à commande vocale. Le bras 1 est donc destiné à évoluer dans un environnement qui peut comprendre un certain nombre d'obstacles. On peut, à titre d'exemple, être amené à introduire le poignet dans les rayons d'un meuble à étagères 16 et l'en ressortir.

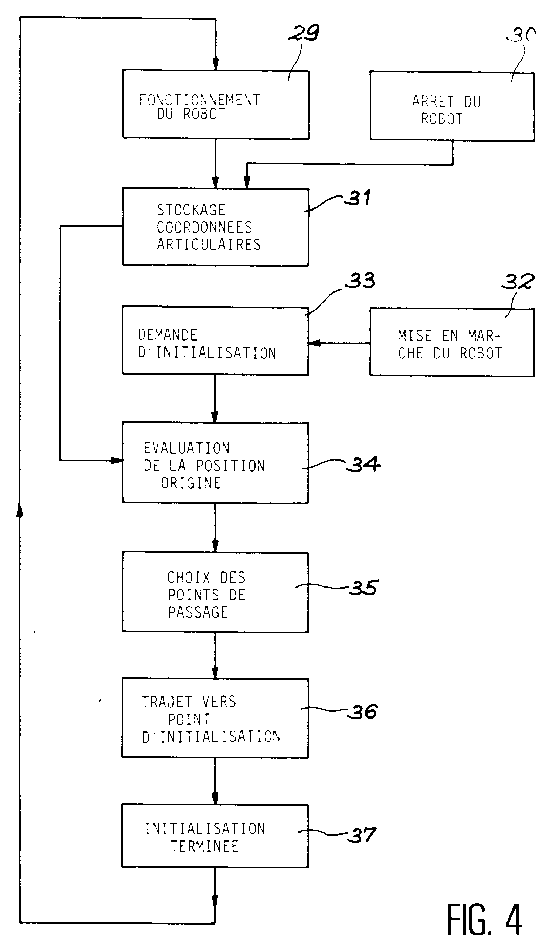

On se reporte maintenant à la figure 4. Au cours d'une étape 29 de fonctionnement du robot, on enregistre périodiquement les coordonnées que font les tronçons 4 aux articulations 5 grâce aux évolutions des indications des codeurs 6. Ces coordonnées sont en fait les mesures des angles aux articulations 5. L'étape d'enregistrement périodique 31 revient à une inscription des coordonnées d'articulation dans la mémoire permanente 13, et l'inscription précédente est effacée. Quand le cycle de fonctionnement est interrompu pour arrêter le robot à l'étape 30, le bras 1 reste au repos mais les coordonnées d'articulation demeurent dans la mémoire permanente sans subir d'altération, et dès que l'opérateur rétablit le fonctionnement (à l'étape 32), l'ordinateur 10 demande une initialisation de la position du bras 1 (à l'étape 33).

La position d'initialisation peut être concrètement une position d'extension maximale du bras 1. Elle est exprimée par des coordonnées inscrites dans l'ordinateur de commande 10. Le procédé consiste alors (étape 34) à évaluer la position d'origine où le bras 1 se trouve actuellement par une lecture des coordonnées de la mémoire permanente 13, après quoi on sélectionne des points de passage à l'étape 35 et on effectue un trajet vers la position d'initialisation à l'étape 36 de manière à passer par les points de passage. Quand les coordonnées d'articulation du bras 1 coïncident avec les coordonnées de la position d'initialisation (étape 37), l'initialisation est terminée et le fonctionnement normal du robot peut reprendre : on revient à l'étape 29.

Les points de passage peuvent être définis comme des états fixes du bras 1 définis par des listes de coordonnées. Ils dépendent de l'état du bras 1 à la mise en marche et peuvent être choisis de sorte que la position du bras 1 converge vers l'état de référence par un mouvement sensiblement régulier et sans à-coup qui fait passer le bras 1 à l'écart d'obstacles fixes dont la position est connue. Un autre principe peut toutefois être adopté, comme on le voit sur les figures 2 et 3, où on considère un bras 1′ composé de deux tronçons seulement : un tronçon proximal 4p et un tronçon distal 4d, ces deux tronçons étant reliés par une articulation distale 5d et le tronçon proximal 4p étant également relié au socle 2 par une articulation proximale 5p. Le raisonnement qui va être exposé est mené sur ce bras 1′ simplifié par un souci d'illustration mais les principes sur lesquels il repose peuvent être appliqués à des bras de forme plus complexe.

Dans la configuration de la figure 2, si 17 désigne l'état de référence, qui est confondu avec la ligne de déploiement maximal du bras 1′, il faut imprimer aux deux tronçons 4p et 4d des rotations de même sens pour parvenir à cet état. On préfère alors imprimer les rotations successivement et commencer à mouvoir le tronçon proximal 4p autour de l'articulation proximale 5p afin d'éloigner généralement plus vite le poignet 3 du socle 2. Quand le tronçon proximal 4p est colinéaire à la ligne 17, la rotation sur l'articulation distale 5d est commandée pour amener aussi le tronçon distal 4d vers la ligne 17, et dans le prolongement du tronçon proximal 4p.

Dans la configuration de la figure 3, les rotations de sens opposés doivent être appliquées aux deux tronçons 4p et 4d pour parvenir au déploiement. On effectue alors le mouvement de rotation autour de l'articulation distale 5d pour amener les deux tronçons 4p et 4d en prolongement, ce qui éloigne ici plus rapidement le poignet 3 du socle 2. On effectue ensuite le mouvement de rotation autour de l'articulation proximale 5p pour amener les deux tronçons 4p et 4d simultanément dans la ligne 17.

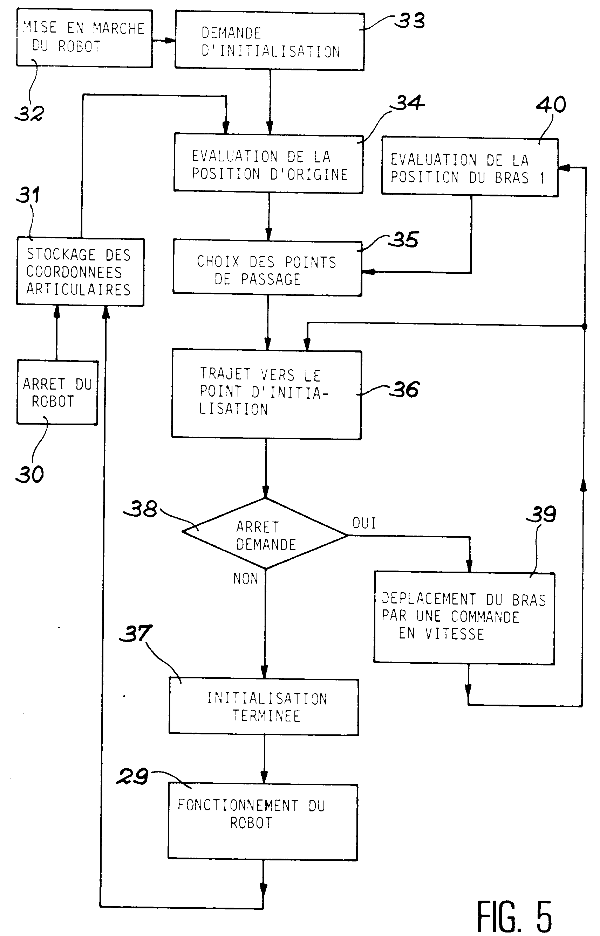

Un perfectionnement du procédé est représenté à la figure 5. On retrouve les étapes 29 à 37 dans le même ordre, mais le déroulement tel qu'il a été prévu par l'ordinateur de commande 10 n'est pas toujours possible à cause des obstacles : si le déplacement du bras 1 commence alors que le poignet est enfoncé dans un des rayons du meuble 16, il est probable que le poignet 3 heurtera les étagères, ce qui interrompra immédiatement le processus d'initialisation. Le bras 1 est en effet muni de capteurs de proximité sur la surface des tronçons 4 et du poignet 3, qui commandent l'arrêt dès qu'un obstacle est trop proche. L'utilisateur peut aussi interrompre de lui-même le processus.

Le recours à des déplacements commandés pour extraire le poignet 3 du meuble 16, le clavier 15, est impossible dans une telle situation car il est nécessaire d'avoir effectué l'initialisation pour pouvoir utiliser ces déplacements. C'est pourquoi, dès qu'un arrêt est commandé, à une étape 38 intermédiaire entre les étapes 36 et 37, l'opérateur saisit le levier 14 pour commander les mouvements de dégagement du poignet 3 à l'étape 39. On passe alors non seulement d'une commande automatique à une commande manuelle, mais d'une commande de mouvements absolus (situés dans l'espace par leurs coordonnées) à une commande de mouvements relatifs car le levier 14 suscite des mouvements dont la vitesse est commandée par son basculement, c'est-à-dire des mouvements relatifs. Les mouvements sont appelés relatifs car on connaît le déplacement par rapport à leur position précédente qui n'est pas forcément connue en absolu. On travaille en écarts de position. Ces mouvements sont enregistrés au cours de l'étape 39, après quoi on peut revenir à l'étape 36 pour reprendre le mouvement d'initialisation automatique, puisque les codeurs 6 ont enregistré les mouvements commandés par le levier 14 et permis de calculer la position actuelle du bras 1. On peut aussi, selon une autre réalisation plus soignée, passer à une étape 40 d'évaluation de la position du bras 1 puis a une étape de définition des points de passage à l'étape 35. D'autres points de passage sont sélectionnés si le mouvement commandé manuellement a été suffisamment important pour changer complètement le trajet le plus court menant à l'état de référence. Cependant, si le mouvement a été de faible ampleur, aucune modification des points de passage n'est décidée et le trajet initialement programmé est parcouru sans changement dès que le point de passage suivant est rallié.

L'invention peut être appliquée à des bras de forme et de complexité quelconques et qui peuvent en particulier comporter des articulations de genres différents tels que des liaisons coulissantes entre tronçons 4 successifs.

## Revendications

1. Procédé d'initialisation, au début d'un cycle de fonctionnement, de la position d'un bras (1) de robot composé de parties (4) mutuellement mobiles reliées par des articulations (5) munies de codeurs (6) de position relative, caractérisé en ce qu'il consiste à relever la position du bras (1) à la fin du cycle de fonctionnement précédent et à enregistrer cette position dans une mémoire permanente (13) sous forme de coordonnées, à lire ces coordonnées au début du cycle de fonctionnement suivant, à calculer des différences entre les coordonnées lues et des coordonnées exprimant la position d'initialisation, et à déplacer le bras jusqu'à la position d'initialisation en lui faisant parcourir des déplacements correspondant aux différences calculées.

2. Procédé d'initialisation de la position d'un bras de robot suivant la revendication 1, caractérisé en ce qu'il comprend une sélection de points de passage en fonction des coordonnées lues, les déplacements parcourus par le bras passant par les points de passage sélectionnés.

3. Procédé d'initialisation de la position d'un bras de robot suivant la revendication 2, caractérisé en ce que les points de passage sont définis par des coordonnées enregistrées dans un moyen de commande (10) du bras (1).

4. Procédé d'initialisation de la position d'un bras de robot suivant la revendication 2, caractérisé en ce que les points de passage sont atteints par des mouvements successifs aux articulations (5).

5. Procédé d'initialisation de la position d'un bras suivant l'une quelconque des revendications 1 à 4, caractérisé en ce qu'il comporte des instants où les déplacements correspondant aux différences calculées sont interrompus et remplacés par des déplacements à vitesse commandée manuellement.

# FIG. 1

FIG. 1A

FIG. 2

FIG. 3

FIG. 4

FIG. 5

**Office européen des brevets**

# RAPPORT DE RECHERCHE EUROPEENNE

Numero de la demande

EP    92 40 1342

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 301 527 (BRIGHAM YOUNG UNIVERSITY) 1 Février 1989 <br> * abrégé * <br> * revendication 7; figure 1 * | 1 | G05B19/18 |
| A |  | 2-4 | |
| Y | PATENT ABSTRACTS OF JAPAN <br> vol. 9, no. 186 (P-377)(1909) 2 Août 1985 <br> & JP-A-60 055 406 ( HITACHI SEISAKUSHO ) 30 Mars 1985 <br> * abrégé * | 1 | |
| A | IBM TECHNICAL DISCLOSURE BULLETIN <br> vol. 30, no. 12, Mai 1988, ARMONK,NY,USA <br> pages 451 - 453; 'Calibration Algorithm For Scara Robots' <br> * le document en entier * | 1,5 | |

| DOMAINES TECHNIQUES RECHERCHES (Int. Cl.5 ) |
|---|
| G05B |

Le présent rapport a été établi pour toutes les revendications

| Lieu de la recherche | Date d'achèvement de la recherche | Examinateur |
|---|---|---|
| LA HAYE | 25 AOUT 1992 | NETTESHEIM J. |

EPO FORM 1503 03.82 (P0402)